Europäisches Patentamt

European Patent Office

Office européen des brevets

(19)

(11) Publication number: **0 019 344**
**A1**

(12) # EUROPEAN PATENT APPLICATION

(21) Application number: **80200458.0**

(22) Date of filing: **14.05.80**

(51) Int. Cl.³: **G 05 D 23/19**
**F 24 H 9/20**

(30) Priority: **17.05.79 NL 7903911**

(43) Date of publication of application:
**26.11.80 Bulletin 80/24**

(84) Designated Contracting States:
**AT BE CH DE FR GB IT LI LU NL SE**

(71) Applicant: **Tricentrol Benelux B.V.**
**No.3, Kleine Krogt**
**NL-4825 An Breda(NL)**

(72) Inventor: **Bouman, Johannes**
**No.104 Tweevoren**
**Nuenen(NL)**

(74) Representative: **Hoijtink, Reinoud et al,**
**OCTROOIBUREAU ARNOLD & SIEDSMA P.O. Box 18558**
**NL-2502 EN The Hague(NL)**

(54) Method and device for controlling the temperature inside an enclosed space.

(57) A method and device of controlling the temperature inside an enclosed space, for example, a building with the aid of a controllable heating unit, a temperature measuring member and a clock for supplying time signals wherein the equivalent outdoor temperature is measured, the resultant measuring information is stored in a memory and the operation of the controllable heating unit is controlled on the basis of said information.

FIG. 2

-1-

The invention relates to a method of controlling the temperature inside the enclosed space, for example, of a building with the aid of a controllable heating unit, a temperature measuring member and a clock for generating time signals and to a device for carrying out the same comprising a controllable heating unit, a temperature measuring member and a clock providing time signals.

In such a known method and device a desired temperature can be set, whilst by means of a control-signal obtained by comparison of the measured temperature with the desired temperature the heating unit is controlled. The desired temperature may be different in different periods, for example, 20°C during the day and 15°C at night. Moreover, a different temperature variation may be desired for different days of the week. The change-over from one value of the desired, set temperature to another is controlled by the clock usually of the type synchronized with the electric mains frequency with mechanical change-over. In this known technique a thermostatic control is carried out by automatically switching on and off the heating unit in dependence upon the difference between the actual and the desired temperature and in the case of central heating safety means may be provided for limiting the temperature of a heat transporting medium to an acceptable maximum value.

It is furthermore known that in central heating the temperature of the heat transporting medium has to be chosen in accordance with the conditions prevailing around the space to be heated in order to ensure optimum efficiency of the system. This adjustment may be carried out manually or automatically with the aid of a temperature sensor in the open air.

The known space heating systems briefly described above have various disadvantages and deficiencies.

Most users of a known heating system entering the heated room, for example, at 8 o'clock a.m. want to find there the desired temperature, for example, of 20°C. To this end the heating unit has to be switched over from the night position to a day position corresponding to a higher temperature some time in advance. Needless to say that with a moderate temperature of the open air the preheating period will be shorter than in the case of a lower outdoor temperature. In practice the switching-on instant is readjusted manually in regular intervals, for example, every other month for correction in accordance with the weather conditions of the time of the year. Obviously only a coarse appromixation of the correction is thus possible so that in the event of abrupt weather changes the desired temperature is not attained or else reached prematurely, which may be a nuisance or give rise to spilling of energy.

The known system in which the boiler temperature is controlled in dependence upon the open air temperature does not provide either an

-3-

adequate solution of the aforesaid problem. Moreover, the outdoor temperature sensor provides only limited information about the loss of heat to be expected, leaving out of consideration important magnitudes such as precipitation, wind, radiation of the sun and heat leakage. In this connection we are concerned with an "equivalent outdoor temperature", a magnitude having the same value as temperature, taking into account the aforesaid factors. In general the actual outdoor temperature will differ from the equivalent outdoor temperature. In the known systems a good understanding of the possibilities and limitations of the system is required for ensuring an acceptable efficiency of operation. Regular manual resetting is usually not carried out, whereas nevertheless the differences from the set mean values may be appreciable within a short period.

The invention provides a solution for the difficulties described and proposes a method of the kind set forth in the preamble in which the equivalent outdoor temperature is measured, the measuring information is stored in a memory and the operation of the controllable heating unit is controlled on the basis of said measuring information, as well as a device of the type set forth in the preamble comprising a control-circuit, one input of which is connected to the memory, a further input is connected to the temperature measuring member and the output is connected to the heating unit.

The method and device according to the invention provide a dynamic temperature-control, in which all thermo-dynamic factors are taken into account which affect the thermal economy inside the space to be heated and the heat exchange with the ambience. Without using an outdoor temperature sensor all external factors, for example, wind causing heat loss, are fully accounted for.

The information stored in the memory may be employed for prediction and anticipation of changes in the space temperature. In a preferred embodiment of the invention a switching instant is, for example, determined on the basis of the measuring information for the controllable heating unit with respect to an instant determined by the clock. Moreover, on the basis of the measuring information the "relative time of operation" to be defined hereinafter an, in addition, be fixed, which is required for maintaining the temperature prevailing after the instant determined by the clock and being at least substantially equal to the desired temperature. In this way it is ensured that the desired temperature will prevail in the space to be heated at the desired instant with substantially full certainty and that the temperature will not be too low or too high, which frequently occurs (overshoot).

With a central heating system the temperature of a heat transporting medium can be determined on the basis of the measuring information for transporting heat from the heating unit to at least one heating device. By this automatic setting and the dynamic trim of the "heating line" the system can operate with optimum efficiency.

That method according to the invention is very simple in which the measurement of the equivalent outdoor temperature per unit time takes place by measuring the heat supplied to the space during a preselected period. It is preferred to use a method in which the measurement of the heat supplied to the space during the preselected period is achieved by measuring the fraction of the preselected period in which the heating unit is operative for giving off heat. This fraction of the preselected period or else the aforesaid relative time of operation, the percentage of use or the "duty cycle" mathematically corresponds to the quotient of the integral during the effective duration of operation and the preselected period.

The equivalent outdoor temperature can be measured by measuring the temperature difference between two instants limiting a predetermined period. Equivalent thereto is the method according to the invention in which the equivalent outdoor temperature is measured by measuring the time elapsing between two measured temperature values.

The invention provides furthermore the possibility of storing in the memory the price per fuel unit and the maximum permissible heating cost per preselected period and to subsequently determine the time signals and the measuring signals on the basis of said data at which the maximum permissible heating cost is exceeded. In this way an extremely effective monitoring of cost is obtained.

It is advantageous in this case to generate a warning signal at a transgression of the maximum permissible heating cost.

It is furthermore possible, in the event of a transgression of the maximum permissible heating cost, to reduce the average amount of heat given off by the heating unit per unit time at least during a preselected period. At a transgression of the maximum permissible heating cost the desired temperature may, as an alternative, be adjusted to a lower value. Finally, at a transgression of the maximum permissible heating cost the switching-on instant of the heating unit may be delayed. In all the latter cases the average heating cost per unit time is reduced until the heating cost per preselected period has dropped below the maximum permissible level, after which the normal temperature control is maintained. It will be obvious that such a control provides an effective cost control.

It is preferred to use a device according to the invention in which the memory and the control-circuit are included in a micro-processor.

The memory may be coupled with read means for storing a programme corresponding to a desired temperature variation in the space. Furthermore the memory may be coupled with read means for storing the fuel price, it being noted that this fuel price may depend upon the time of the day and on the day of the week.

The memory may furthermore be coupled with read-out and visual display means on a panel, for example, in the form of alpha-numerical displays by light emitting diodes or "LED's".

The read-in means may comprise button switches. The operation of the switches may be normally blocked and released by depressing a safety knob, suitable for protection against injudicious use, for example, by children. As an alternative the read-in means may consist of at least one potentiometer.

The device according to the invention may furhtermore be provided with monitoring means for producing a warn signal at the transgression of a predetermined fraction of a preselected period in which the heating unit is switched on for giving off heat. This is a check of the satisfactory operation of the device. The transgression of said predetermined fraction may signify that the set temperature is not attained, for example, because a window is open. The warn signal may furthermore be indicative of an extinction of the guard flame or of a stagnation of the fuel supply.

The warn signals may be of the optical type, for example, a flashing lamp or of the acoustic type, for example, a buzzer.

The memory is preferably of the "non-volatile" type i.e. the type in which the information is maintained when the mains voltage is lacking.

For a set, desired temperature value an increase or decrease of, for example, 2° C may

llows, - which tolerance is not responded to.

The visual display may give the user information about the relative time of operation and the heating cost for a predetermined period.

The invention will now be described with reference to the accompanying drawing. Therein show

Figure 1 a functional block diagram of a known space heating system with thermostatic control and a clock for the manual setting of a preselected switching instant,

Figure 2 a functional block diagram of an embodiment of the space heating system in accordance with the invention,

Figure 3 a graphical illustration of a potential temperature variation with time in the space heated by the system of figure 2,

Figure 4 a block diagram of a temperature control forming part of the system of figure 2,

Figure 5 a current diagram of an algorithm corresponding to a method in accordance with the invention,

Figure 6 a developed first detail of the current diagram of figure 5 and

Figure 7 a developed second detail of the current diagram of figure 5.

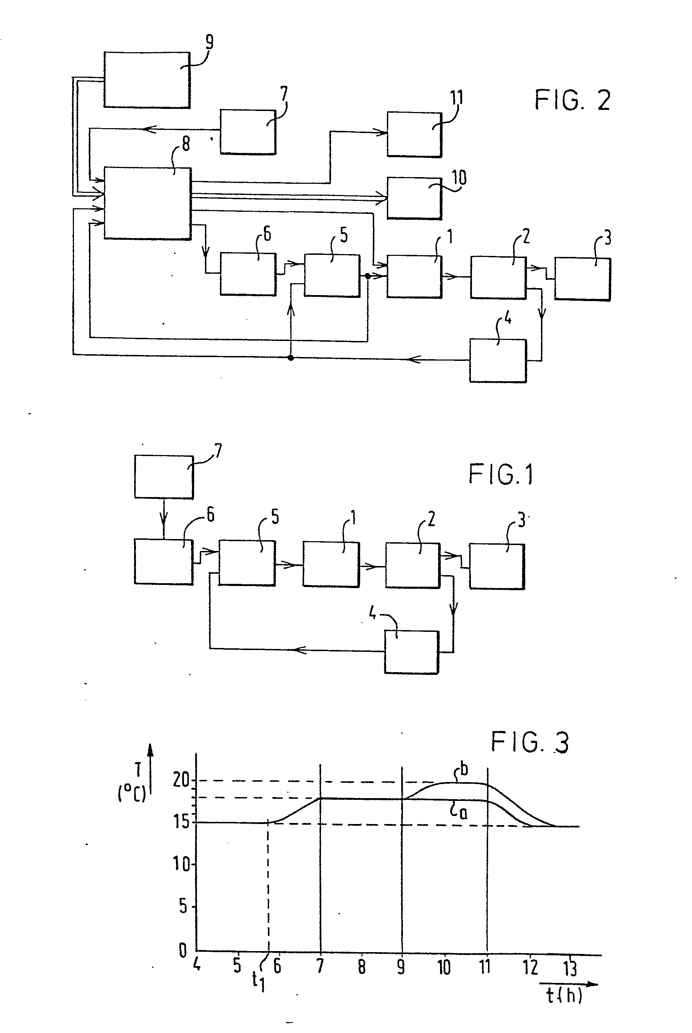

The conventional space heating system shown in fig.1 comprises a heating unit 1, which directly or indirectly heats a space 2. Part of the heat supplied to the space 2 gets lost to the surroundings 3, the remaining part raises the temperature in the space 2, which is measured by a space temperature measuring member 4, for example, a semiconductor element, the output signal of which is applied to a compartison circuit 5, to which is furthermore fed the output signal of a temperature setting member 6 for setting the desired space temperature. The output signal of the comparator 5 corresponding to the difference between the measured and the desired temperatures is fed as a control-signal to the heating unit 1, for example, for switching on or off a pump for the heat transporting medium or of a burner.

From figure 1 it will be apparent that this known system is of the negatively fedback, self-correcting type by which a desired temperature can be attained a period of time after switching on and be maintained within given tolerances.

A difference between, for example, the desired day temperature and the desired night temperature can be set in the temperature setting member 6. The change-over between the different values takes place under the action of time signals applied by a clock 7 to the temperature setting member 6.

Figure 2 shows a functional diagram of a space heating system according to the invention. The elements 1 to 7 of this system correspond with those of the system of figure 1 and are, therefore, designated by the same reference numerals as in fig.1. Whereever possible the description of these elements and their functional relationship will not be repeated.

The system of figure 2 comprises a central processing unit in the form of a microprocessor 8.

The input signals thereof are: output signals of the read-in means 9, the time signals from the clock 7, the output signal of the temperature measuring member 4 invariably corresponding with the measured space temperature and the output signal of the comparator 5. The method of processing this input information will be described hereinafter.

The output signals of the microprocessor are applied to: the temperature setting member 6, the heating unit 1, a signalling or monitoring member 10 and visual display means 11.

The microprocessor 8 comprises a memory (not shown separately). In the embodiment shown this memory has stored in it signals indicative of the time for which the comparator 5 applies an "on" control-signal to the heating unit 1. By comparing these signals with signals corresponding to a preselected period, the microprocessor assesses the relative time of operation of the heating unit. In connection with the space temperature measured by the temperature measuring member 4 information is thus obtained about the heat dissipation of the space per unit time. This information is stored in the memory by way of "predictor" used for anticipation of future developments.

In contrast to the system of figure 1, in which a switching instant particularly for starting an interval of higher temperature can be readjusted only by external manipulation the dynamic system of figure 2 according to the invention permits of determining a switching instant for the controllable heating unit with respect to an instant preset in the clock on the basis of the measuring information stored in the memory. If, for example, a temperature of 20°C is desired at 8 O'clock, a preheating period of, for example, one hour will be required in the case of a very low outdoor temperature or of strong wind, whereas in mild weather a period of, for example, 20 minutes may be sufficient.

It should be noted that the clock 7 in the system of figure 2 may be of the electronic type with quartz crystal and may form part of the microprocessor.

The read-in means 9 may serve for storing in the memory a programme corresponding to a desired space temperature variation with time of the fuel price and system and space data such as the

-10-

available power and one or more time constants.

The visual display means 11 may serve for representing the measured space temperature desired at a given instant, the relative time of operation, the heating cost during a given period and further data which may be of importance to the user.

The warn signal 10 may indicate by a burning lamp whether the heating unit is operating. As alternatives, flashing of a lamp or a buzzer may be indicative of the transgression of a preset maximum relative time of operation or of a maximum value of the fuel cost.

Figure· 3 illustrates by way of example a temperature variation with time. The space temperature in degrees centrigrade is plotted on the vertical and the time in terms of the hour of the day is plotted on the abscissa.

For the first period up to 7 o'clock the temperature is required not to drop below about 15°C. This can be satisfied with any desired degree of accuracy.

For the second period of 7 to 9 o'clock the temperature should be 18°C. In the manner descrbed above for the device according to the invention a switching-on instant $t_1$ is chosen so that at 7 o'clock the required space temperature is attained with certainty. A small safety margin of, for example, 5 minutes may be observed for compensating an abrupt, drastic variation of the surroundings.

In the second period the normal thermostatic control is made at 18°C.

For this second period two possibilities are described  by way of example. Curve a  relates to the case in which the temperature should remain 18°C up to 11 o'clock. According to curve b an additional heating occurs at 9 o'clock, which is not foreseen in this example. For example, the user may experience the temperature as being too low, · because of which he sets a temperature 2°C higher via the read-in means. In this case the display means can indicate to what additional energy consumption in terms, for example, of cost a day or of a percentage corresponds the temperature increase. _Mutatis mutandis_ the same applies to the setting of a temperature decrease.

For the last period from 11 o'clock it is again required for the temperature not to drop below 15°C so that the heating unit is stopped at 11 o'clock and the space cools down until the desired temperature is reached.

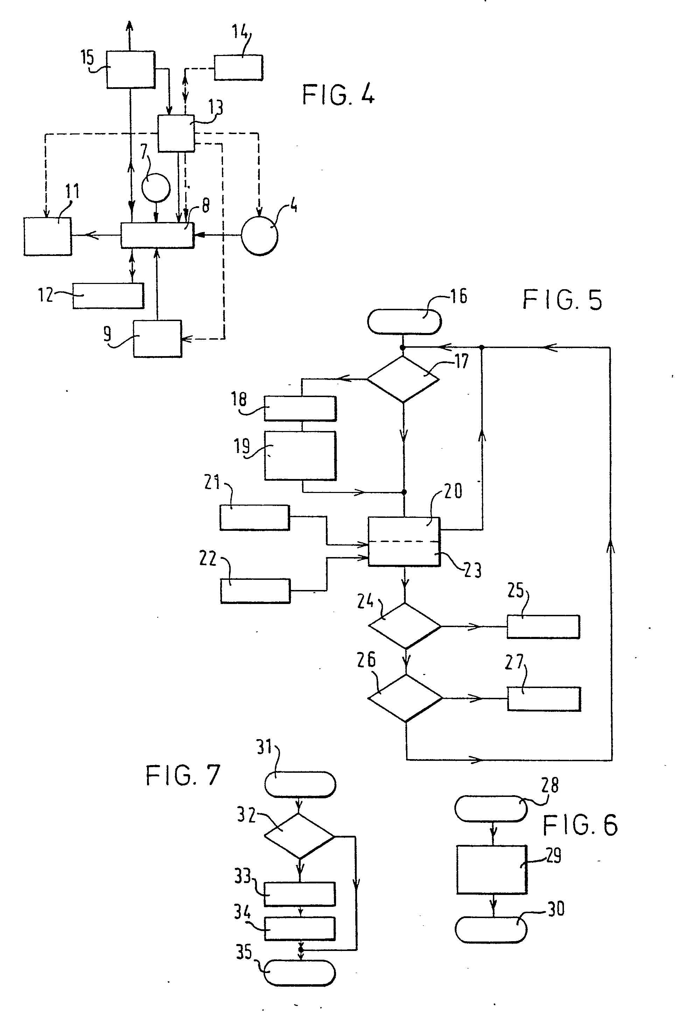

Figure 4 shows schematically the structure of a temperature control according to the invention. The elements corresponding with those of figure 2 are designated by the same reference numerals. The solid lines indicate information lines and the broken lines indicate supply lines.

After the explanations with reference to figure 2 the operation of the control of figure 4 need no longer be explained. It may be sufficient to mention a few details of the embodiment.

The microprocessor 8 is of the MC 3870 type with which is coupled a 128 Byte RAM 12. A supply unit 13 is connected to the microprocessor 8, a battery unit 14 and a solid-state relay 15 controlled by the microprocessor 8 for applying control-signals to the heating unit (not shown in figure 4). The relay 15 preferably is of the type capable of providing information to the microprocessor about the current fed to the heating unit, for example, by means of a resistor included in the operative current circuit in order to assess the relative time of operation. In normal operation on the current supply from the mains the supply unit 13 serves to maintain the charge of the battery 14. In the event of mains disturbance the batteries take over the supply function so that uninterrupted operation of the temperature-control is safeguarded at all times.

-12-

Figure 5 illustrates in the form of a simplified current diagram the information processing for the system shown in fig.2.

Though it may be superfluous it is noted here that the rectangular blocks are so-called "do" or execution blocks and the trapezia put on one point are so-called "test" or interrogation blocks, the output of which on the side corresponds to "yes" (i.e. "the assertion is correct") and the outputs on the bottom side to "no" (i.e."the assertion is incorrect").

Since the principle of a current diagram is known to those skilled in the art it will be sufficient to refer further to mention the informative function of each block by referring to its reference numeral.

Block 16 : resetting.

Block 17 : new period ?

Block 18 : selection of operational state.

Block 19 : selection and storing of temperature and time.

Block 20 : desired temperature

Block 21 : time control for interrupting the operational cycle.

Block 22 : keyboard for external interruption of the operation cycle.

Block 23 : release/interrupt

Block 24 : action of 21?

Block 25 : routine for interruption by 21: see also figure 6.

Block 26 : action of 22?

Block 27 : routine for interruption by 22: see also figure 7.

Figure 6 illustrates the structure of the routine 25.

Block 28 : routine for interruption by 21.

Block 29 : routine for the execution of various measurements.

-13-

Block 30 : return

Figure 7 shows the structure of the routine 27.

Block 31 : routine for interruption by 22.

Block 32 : input signal?

Block 33 : decoding input signal.

Block 34 : execute instructions.

Block 35 : return.

It is noted that figs.5 to 7 illustrate only an example of information processing in the system of figure 2. For example, the current diagram does not include information about fuel prices.

-1-

CLAIMS

1. A method of controlling the temperature inside an enclosed space, for example, a building with the aid of a controllable heating unit, a temperature measuring member and a clock for supplying time signals characterized in that the equivalent outdoor temperature is measured, the resultant measuring information is stored in a memory and the operation of the controllable heating unit is controlled on the basis of said information.

2. A method as claimed in claim 1, characterized in that on the basis of the measuring information a switching instant is determined for the controllable heating unit with respect to an instant determined by the clock.

3. A method as claimed in claim 1 or 2 characterized in that on the basis of the measuring information the temperature of a heat transporting medium is determined for transporting heat from the heating unit to at least one heat radiating device.

4. A method as claimed in claim 3 characterized in that at least two heat radiating devices are provided and in that on the basis of the measuring information also the heat transfer to the various heat radiating devices is selectively determined.

5. A method as claimed in claims 1 to 4 characterized in that the measurement of the equivalent outdoor temperature is performed by measuring the heat supplied to the space during a preselected period.

6. A method as claimed in claim 5 characterized in that the measurement of the heat supplied to the space during the preselected period is performed by measuring the fraction of the preselected period in which the heating unit is switched on for giving off heat.

7. A method as claimed in claim 1 characterized in that the equivalent outdoor temperature is measured by measuring the temperature difference between two instants limiting a predetermined period.

8. A method as claimed in claim 1 characterized in that the equivalent outdoor temperature is measured by measuring the time elapsing between two measured temperature values.

9. A method as claimed in anyone of claims 1 to 8 characterized in that the memory has stored in it the price per fuel unit and the maximum permissible heating cost for each preselected period and in that subsequently on the basis of these date, the time signals and the measuring signals, it is assessed whether the maximum permissible heating cost is exceeded.

10. A method as claimed in claim 9 characterized in that at a transgression of the maximum permissible heating cost a warn signal is produced.

11. A method as claimed in claim 9 characterized in that at a transgression of the maximum permissible heating cost the average amount of heat supplied by the heating unit per unit time is reduced at least for a preselected period.

12. A method as claimed in claim 11, characterized in that at a transgression of the maximum permissible heating cost the desired temperature is adjusted to a lower value.

13. A method as claimed in claim 11 characterized in that at a transgression of the maximum permissible heating cost the switching-on instant of the heating unit is delayed.

14. A device for carrying out a method as claimed in anyone of the preceding claims comprising a controllable heating unit, a temperature measuring member and a clock for supplying time signals characterized by a control-circuit, one input of which is connected to the memory, a further input of which is connected to the temperature measuring member and the output of which is connected to the heating unit.

15. A device as claimed in claim 14 characterized in that the memory and the control-circuit are included in a microprocessor.

16. A device as claimed in claim 14 or 15 characterized in that the memory is coupled with read-in means for storing a programme corresponding to a desired temperature variation in the space.

17. A device as claimed in claim 14 or 15 characterized in that the memory is coupled with read-in means for storing the fuel price.

18. A device as claimed in anyone of claims 15 to 17 characterized in that the memory is coupled with read-out and visual display means arranged on a panel.

19. A device as claimed in claim 16 or 17 characterized in that the read-in means comprise push button switches.

20. A device as claimed in claim 19 characterized in that the operation of the switches is normally blocked and can be released by depressing a safety knob.

21. A device as claimed in anyone of claims 14 to 20 characterized by monitoring means for producing a warn signal at the transgression of a predetermined fraction of a preselected period during which the heating unit is switched on for supplying heat.

FIG. 2

FIG.1

FIG. 3

0019344

FIG. 4

FIG. 5

FIG. 7

FIG. 6

0019344

European Patent Office

**EUROPEAN SEARCH REPORT**

Application number

EP 80 20 0458

| DOCUMENTS CONSIDERED TO BE RELEVANT | | | CLASSIFICATION OF THE APPLICATION (Int. Cl. 3) |
|---|---|---|---|
| Category | Citation of document with indication, where appropriate, of relevant passages | Relevant to claim | |
| | POLYTECHNISCH TIJDSCHRIFT: ELECTRO-TECHNIEK ELECTRONICA, vol. 33, no. 7, July 1978, pages 373-381 The Hague, NL. KLEIN WOLTERINK: "Energiebesparing en besturing van de huisinstalla-tie met een microprocessor" <br><br> * Page 373, left-hand column, lines 6-10; page 375, middle column, line 1 - right-hand column, line 35; page 377, right-hand column, line 8 - page 379, middle column, line 6; figure 3 and figure on page 376 * <br><br> -- | 1,3,5, 8,14, 15 | G 05 D 23/19 F 24 H 9/20 |
| | US - A - 3 979 059 (J. DAVIS et al.) <br><br> * Column 1, line 60 - column 2, line 17; column 2, line 34 - column 3, line 41; figure 1 * <br><br> -- | 2 | TECHNICAL FIELDS SEARCHED (Int.Cl. 3) <br><br> G 05 D 23/19 G 06 F 15/46 F 24 D 19/10 |
| | US - A - 4 136 392 (B. WESTPHAL) <br><br> * Column 2, line 53 - column 4, line 33; column 7, line 10 - column 8, line 20; figures 2, 5A * <br><br> -- | 1-4, 14,15 | |
| | IBM TECHNICAL DISCLOSURE BULLETIN, vol. 20, no. 8, January 1978, pages 2981-2984 New York, U.S.A. R.J. COUGHLIN: "Computerized con-trol of chilled water system" <br><br> * Pages 2981-2982 * <br><br> -- <br><br> ./. | 7 | |

CATEGORY OF CITED DOCUMENTS

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

| The present search report has been drawn up for all claims | | |
|---|---|---|
| Place of search | Date of completion of the search | Examiner |
| The Hague | 20-08-1980 | HELOT |

EPO Form 1503.1 06.78

| Category | DOCUMENTS CONSIDERED TO BE RELEVANT | | CLASSIFICATION OF THE APPLICATION (Int. Cl. 3) |
|---|---|---|---|
| | Citation of document with indication, where appropriate, of relevant passages | Relevant to claim | |
| | FR - A - 2 395 671 (MECELEC) <br><br> * Page 1, lines 1-7; page 2, line 40 - page 4, line 25; figure * <br><br> -- | 1,14-17 | |
| | FR - A - 2 381 351 (ULF LENNART ERNFRID NYBERG) <br><br> * Page 1, lines 1-8; page 2, line 39 - page 3, line 30; figure * <br><br> -- | 1,14, 16 | |
| | IEEE TRANSACTIONS ON CONSUMERS ELECTRONICS, vol. CE-25, no. 1, February 1979, pages 125-132 New York, U.S.A. K. MOHRI et al.: "Design philosophy and practice of microprocessor-controlled room air conditioner" <br><br> * Page 127, right-hand column, line 14 - page 128, right-hand column, line 23; figure 8 * <br><br> -- | 14,15, 18 | TECHNICAL FIELDS SEARCHED (Int. Cl. 3) |
| A | GB - A - 1 193 711 (HONEYWELL LTD.) <br><br> * Page 1, lines 10-18; page 3, lines 23-40; figure 1 * <br><br> -- | 2,8 | |
| A | US - A - 3 246 839 (F. STEGHART) <br><br> * Column 1, lines 32-70; column 3, line 16 - column 4, line 32; figure 1 * <br><br> ---- | 1 | |